# EUROPÄISCHE PATENTANMELDUNG

(11) **EP 3 862 302 A1**
(43) Veröffentlichungstag der Anmeldung: **11.08.2021**
(21) Anmeldenummer: 21156014.9
(22) Anmeldetag: 09.02.2021
(51) Int. Cl.: B65G 47/82, B65G 47/256

(54) **BANDFÖRDERER MIT AUSWERFER**

(30) Priorität: 10.02.2020 DE 202020100680 U
(71) Anmelder: WIPOTEC GmbH, 67657 Kaiserslautern (DE)
(72) Erfinder: Walter, Markus Jochen, 67705 Trippstadt (DE); Müller, Lukas, 66851 Bann (DE)
(74) Vertreter: Eder Schieschke & Partner mbB

(57) **Zusammenfassung**

Bandförderer zur Förderung von Produkten in einer ersten Richtung x (Förderrichtung), mit einer sich in einer zweiten, zur ersten Richtung orthogonalen Richtung y (Querrichtung) erstreckenden Breite (B), und einer zu den beiden Richtungen x, y orthogonalen Richtung z (Höhenrichtung), mit einem ortsfest zum Bandförderer (1) angeordneten und in y-Richtung (Querrichtung) wirkenden Auswerfer (3) zum Aussortieren/Ausschleusen von Produkten, wobei der Auswerfer (3) einen Endbereich (37) aufweist, welcher dem auszusortierenden Produkt zugewandt ist, wobei der Auswerfer (3) einen Grundkörper (5) aufweist, welcher mittels eines Halters in einer Grundposition am Bandförderer (1) angeordnet ist, wobei die Grundposition des Grundkörpers (5) mittels einer Einstellvorrichtung (13) des Halters in y-Richtung innerhalb eines Einstellweges eingestellt werden kann, so dass der Endbereich (37) des nicht betätigten Auswerfers (3) in y-Richtung um wenigstens bis zur halben Breite (B), bevorzugt zwei Drittel der Breite (B) bzw. höchst bevorzugt um die gesamte Breite (B) des Bandförderers (1) in das Band (7) hineinragen kann, wobei die Baulänge des Auswerfer-Grundkörpers (5) in y-Richtung wesentlich kleiner als die Breite (B) des Bandförderers (1) ist

## Beschreibung

Die Erfindung betrifft einen Bandförderer zur Förderung von Produkten in einer Förderrichtung mit einem am Bandförderer angeordneten und in Querrichtung zur Förderrichtung wirkenden Auswerfer zum Aussortieren/Ausschleusen von Produkten.

Derartige Bandförderer finden beispielsweise in Produktionslinien bei der Herstellung, Prüfung und Kontrolle von Packungen bzw. Produkten Anwendung, um als nichtkonform ermittelte Exemplare automatisch aus dem Produktstrom auszusortieren bzw. auszuschleusen.

Zum Sortieren der Produkte können dabei unterschiedliche Sortiersysteme mit verschiedenen Arbeitsweisen verwendet werden, wie zum Beispiel Blasdüsen, Sortierweichen, Sortierklappen oder auch Schieber bzw. Pusher.

Letztere verwenden üblicherweise pneumatische Hubzylinder als Stellorgan, an welchen eine Pusherplatte montiert ist, die das Produkt beim Ausfahren des Zylinders quer zur Produktstromrichtung ausschleust.

Der Produktstrom ist zumeist durch Förderbänder realisiert, die eine Breite quer zur Förderrichtung aufweisen. Auf dem Förderband können Produkte verschiedener Größe längs verschiedener Querpositionen gefördert werden, wobei typischerweise kein Produkt seitlich über die Breite des Förderbandes hinausragt.

Im Sinne der Erfindung ist im Folgenden unter dem Begriff "Bandförderer" jegliche Förderstrecke zum Fördern von Produkten zu verstehen, unabhängig davon, ob sie einen Riemen, mehrere parallel auch überlappende Riemchen, Rollen, Rutsche, Gleitplatte, Rollenbahn, Kette, Plattenkettenband, etc. aufweist.

Möchte man mit einem Sortierpusher die gesamte Vielfalt des möglichen Produktstroms abdecken, so muss der maximale Verschiebeweg der Pusherplatte in Querrichtung der Breite des Förderbandes entsprechen.

Wenn der real vorkommende Produktstrom hinsichtlich seiner Breitenvarianz nicht die volle Bandbreite ausnutzt, verschenkt der Sortierpusher wertvolle Zeit (Verfahrweg), bis er an die Berührungsposition vorgefahren ist. Gleiches gilt für das Zurückfahren. Hierdurch wird nachteiligerweise der Durchsatz des gesamten Sortiersystems verringert.

Da der Kolben bis zu seinem maximalen Hub ausgefahren werden muss, damit die Pusherplatte die Produkte erreicht und aussortiert, behindert der Kolben so lange den Produktstrom, bis er wieder vollständig seine Ausgangsposition erreicht hat. Dadurch wird der Durchsatz reduziert.

Zudem wird durch den maximal erforderlichen Hub des Kolbens eine Mindestlänge der Kolbenstange vorgegeben, die den Platzbedarf in Querrichtung vergrößert. In zurückgezogener Stellung ragt die Kolbenstange dann störend quer zur Förderrichtung vom Bandförderer ab und stellt eine Verletzungsgefahr dar. Auch kann die herausragende Stange versehentlich beschädigt werden.

Möchte man mit einer Blasdüse die gesamte Vielfalt des möglichen Produktstroms abdecken, so muss der erzeugte Luftdruck an der Austrittsöffnung (an der Düse) eine entsprechende Stärke aufweisen, um auch maximal entfernte Produkte (im Bereich des gegenüberliegenden Bandrandes) auszusortieren. Hierdurch erhöht sich die (Reaktions-)Zeit bis zum Auswerfen eines Produktes, so dass der Durchsatz entsprechend verringert wird. Zudem erhöht sich auch der aufzuwendende Druck und verursacht eine verstärkte Lärmentwicklung (bis hin zu einem lauten Knallen), die in einem Arbeitsprozess als störend empfunden wird.

Der vorliegenden Erfindung liegt daher die Aufgabe zugrunde, einen Bandförderer zu schaffen, der vorstehende Nachteile verhindert und auf einfache Weise den Durchsatz erhöht, die Bautiefe (quer zum Band) verringert und die Gefahr von Beschädigungen des Bandförderers sowie Beeinträchtigungen oder gar Verletzungen des Bedienpersonals vermindert.

Diese Aufgabe wird erfindungsgemäß durch einen Bandförderer mit den Merkmalen des Anspruchs 1, durch eine Verwendung eines derartigen Bandförderers mit den Merkmalen des Anspruchs 10, sowie durch einen entsprechenden Auswerfer mit den Merkmalen des Anspruchs 12 gelöst.

Der erfindungsgemäße Bandförderer weist zur Förderung von Produkten in Förderrichtung x einen am Bandförderer angeordneten und in Querrichtung y zu einem Band des Bandförderers wirkenden Auswerfer zum Aussortieren bzw. Ausschleusen von Produkten auf, wobei der Auswerfer einen Endbereich umfasst, welcher dem auszusortierenden Produkt zugewandt ist.

Der Auswerfer weist einen Grundkörper auf, welcher mittels eines Halters in einer Grundposition ortsfest zum, vorzugsweise am Bandförderer angeordnet ist. Die Grundposition des Grundkörpers kann mittels einer Einstellvorrichtung des Halters in y-Richtung innerhalb eines Einstellweges eingestellt und fixiert werden, so dass der Endbereich des nicht betätigten Auswerfers in y-Richtung um wenigstens bis zur Hälfte, bevorzugt um zwei Drittel bzw. höchst bevorzugt um die gesamte Breite des Bandförderers in das Band hineinragen kann.

Des Weiteren ist die Baulänge bzw. Bautiefe des Grundkörpers des Auswerfers in y-Richtung wesentlich kleiner als die Breite des Bandförderers, beispielsweise höchstens drei Viertel, zwei Drittel, die Hälfte, ein Drittel oder ein Viertel der Breite des Bandförderers.

Hierdurch ist es vorteilhafterweise möglich, den Auswerfer - im Falle eines Produktstroms, der nicht die ganze Bandbreite ausnutzt - in seiner Grundposition (und damit seinem Endbereich) in y-Richtung in das Band hinein zustellen und auf diese Weise den Abstand zwischen dem Endbereich des unbetätigten Auswerfers und den Produkten eines Produktstroms zu verringern. Der verringerte Abstand bewirkt vorteilhafterweise ein schnelleres Aussortieren (kürzere Reaktionszeit) und ermöglicht damit einen höheren Durchsatz bei der Produktverarbeitung.

Beispielsweise wird bei einem Auswerfer mit einem bewegbaren Endbereich (Sortierweichen, Sortierklappen oder auch Schieber bzw. Pusher) der erforderliche Hub verringert.

Aber auch bei einem Auswerfer mit einem relativ zum Grundkörper ortsfesten, beispielsweise als Blasdüse ausgebildeten Endbereich verringert ein geringerer Abstand zu einem Produktstrom vorteilhafterweise die Reaktionszeit (des Auswerfvorgangs). Zudem ermöglicht der geringere Abstand eine Verringerung des aufzuwendenden Drucks und trägt zu einer Minderung der Lärmentwicklung bei.

In bevorzugter Ausgestaltung der Erfindung ist der Auswerfer als Schieber, Pusher oder Ähnliches mit einem in Querrichtung y wirkenden bewegbaren Endbereich ausgeführt. Der Endbereich ist bei Betätigung zwischen seiner zurückgezogenen Anfangsposition und seiner vorgefahrenen Endposition (Hub) bewegbar. Durch die erfindungsgemäße Einstellbarkeit der Grundposition des Grundkörpers kann auch eine Anfangsposition des Endbereichs eingenommen werden, die in y-Richtung wesentlich innerhalb der Breite des Bandes des Bandförderers liegt.

Bei einem Auswerfer mit bewegbarem Endbereich wird dadurch der erforderliche bauartbedingte maximale Hub wesentlich verringert (beispielsweise auf ein Viertel, Drittel, oder die Hälfte der Bandbreite), so dass auch die erforderliche maximale Erstreckung (Bauraum bzw. Bautiefe) des Auswerfers in y-Richtung wesentlich kleiner ausfällt.

Zudem ist nach der Erfindung im Falle eines Schiebers bzw. Pushers das maximale Herausragen einer Kolbenstange (in y-Richtung) verringert, so dass das Risiko einer Beschädigung der Stange und einer Verletzung eines Bedienpersonals vermindert wird.

In besonders vorteilhafter Ausgestaltung der Erfindung ist der Auswerfer als Kurzhubpusher ausgeführt. In diesem Fall kann der in y-Richtung erforderliche Bauraum besonders klein gehalten werden. Ein derartiger Kurzhubpusher übt bevorzugt einen Impuls aus, der ausreicht, um ein Produkt (in Abhängigkeit von Produktparametern, wie Art, Masse, Grundfläche, Beschaffenheit der Grundfläche, Reibungskoeffizient zwischen Grundfläche und Bandoberfläche unter Überwindung der Haftreibung) über die gesamte Breite des Bandes (Bewegungskomponente in y-Richtung) zu bewegen (pushen) und damit auszusortieren.

In weiterer Ausgestaltung der Erfindung ist die Einstellvorrichtung wenigstens zweistufig, beispielsweise als teleskopförmiger Auszug ausgebildet, so dass die Abmessung der Einstellvorrichtung in y-Richtung kleiner ist als der maximale Einstellweg. Dies trägt vorteilhafterweise ebenfalls zur Verringerung des in y-Richtung erforderlichen Bauraums bei.

Die Einstellvorrichtung kann in besonderer Ausgestaltung der Erfindung beispielsweise aus wenigstens zwei separaten, bevorzugt parallel angeordneten, in y-Richtung ausgerichteten Vorrichtungen zusammengesetzt sein, wodurch sich der Einstellweg als Summe der Teileinstellwege ergibt.

In besonders bevorzugter Ausgestaltung der Erfindung ist der Auswerfer als Hubsortierer oder Pusher ausgeführt, wobei wenigstens ein Teil der Einstellvorrichtung (z.B. die Führung) als Luftleitelement mit einer Austrittsöffnung (vorzugsweise austauschbaren Düse), d.h. als Blasdüse, ausgebildet ist. Hierdurch kann beispielsweise auch ein bei einem Start des Bandförderers häufig erforderliches Ausblasen (Bänder-Räumen) aller noch in der Produktionsstrecke befindlichen Produkte per Dauerluftstrom ermöglicht werden, ohne dass eine sonst notwendige separate Blasdüse vorgesehen sein muss.

Im Falle einer mindestens zweistufigen Einstellvorrichtung kann der als Blasdüse ausgebildete Teil der Einstellvorrichtung zudem in y-Richtung einstellbar und fixierbar ausgeführt sein.

In weiterer Ausgestaltung der Erfindung weist die Einstellvorrichtung eine Positionseinrichtung, beispielsweise Skala, Sensoren, Wegmesseinrichtung, etc. auf, mittels welcher die aktuelle Grundposition erfasst oder eingestellt und vorzugsweise markiert werden können. Unter einem Markieren ist im Sinne der Erfindung auch ein Speichern (und Abrufen) der entsprechenden Positionsdaten zu verstehen.

In dieser Ausgestaltung ist es auch denkbar, dass in einem erforderlichen Fall, beispielsweise bei einem Produktwechsel, automatisch eine vordefinierte, z.B. abgespeicherte oder berechnete Grundposition eingenommen wird.

In besonders vorteilhafter Ausgestaltung der Erfindung ist die Positionseinrichtung derart ausgebildet, dass die Grundpositionen selbsttätig automatisch (also ohne manuelles Zutun einer Bedienperson) eingestellt und/oder überprüft und/oder ermittelt und/oder angezeigt werden können, wobei selbstverständlich auch eine semiautomatische Einstellung unmittelbar an der Einstellvorrichtung oder mittelbar über ein Bedienprogramm denkbar ist.

In dieser Ausgestaltung ist es auch denkbar, dass die Grundposition des Grundkörpers in Abhängigkeit einer mittels einer Sensoreinrichtung - beispielsweise Lichtschranke(-n), Näherungssensor, Kamera - detektierten Produktposition in y-Richtung automatisch angepasst wird, z.B. für jedes einzelne Produkt oder eine Gruppe bzw. Charge von Produkten.

Weitere vorteilhafte Ausgestaltungen der Erfindung ergeben sich aus den abhängigen Ansprüchen.

Die Erfindung wird nachfolgend anhand eines in der Zeichnung dargestellten Ausführungsbeispiels näher erläutert.

In der Zeichnung zeigen:
- Fig. 1: eine perspektivische Vorderansicht eines erfindungsgemäßen Bandförderers mit einem Auswerfer in einer ersten Grundposition;
- Fig. 2: eine linke Seitenansicht eines Bandförderers nach Fig. 1;
- Fig. 3: eine perspektivische Vorderansicht des erfindungsgemäßen Bandförderers mit einem Auswerfer in einer zweiten Grundposition;
- Fig. 4: eine linke Seitenansicht eines Bandförderers nach Fig. 3;
- Fig. 5: eine perspektivische Vorderansicht des erfindungsgemäßen Bandförderers nach Fig. 3 und Fig. 4 mit einem Auswerfer mit ausgefahrenem Endbereich;
- Fig. 6: eine linke Seitenansicht eines Bandförderers nach Fig. 5;
- Fig. 7: eine perspektivische Vorderansicht des erfindungsgemäßen Bandförderers mit einem Auswerfer in einer dritten Grundposition mit einem Auswerfer mit ausgefahrenem Endbereich;
- Fig. 8: eine linke Seitenansicht des Bandförderers nach Fig. 7 und
- Fig. 9: eine perspektivische Rückansicht des Bandförderers nach Fig. 7 und Fig. 8.

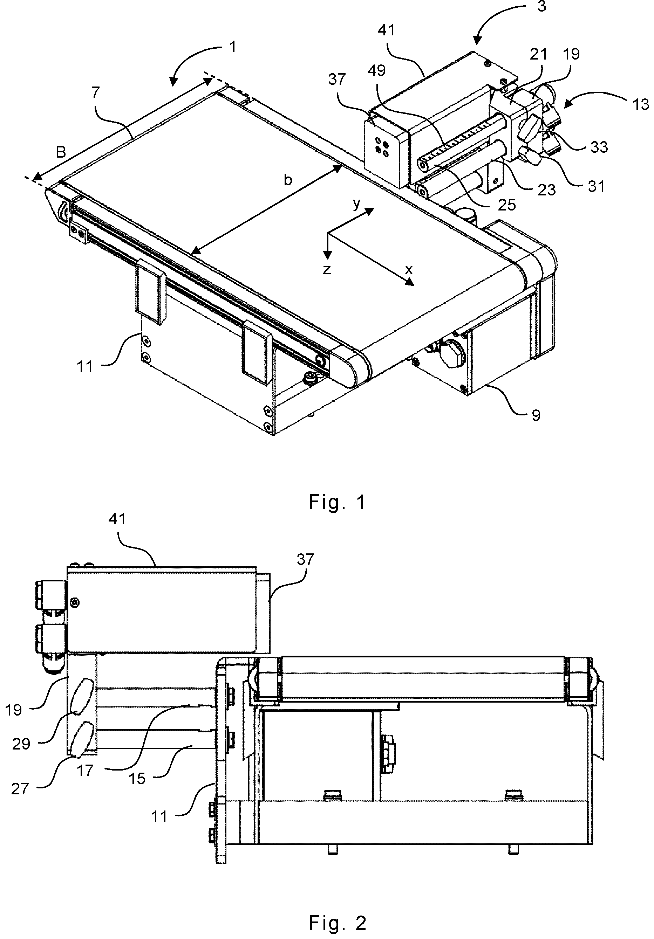

Der in Fig. 1 dargestellte Bandförderer 1 umfasst ein Gestell 11 und ein Band 7, welches über in der Zeichnung nicht näher dargestellte Rollen am linken und rechten Ende geführt und mittels eines am Gestell 11 angeordneten Motors 9 in Förderrichtung x angetrieben wird.

Der Bandförderer besitzt quer zur Förderrichtung x in y-Richtung eine Breite B. Das Band 7 des Bandförderers 1 liegt innerhalb dessen Breite B mit einem vorderen und hinteren Rand, so dass das Band 7 eine entsprechend geringere Breite b aufweist.

An der hinteren Seite des Bandförderers 1 ist etwa im mittleren (in x-Richtung) Bereich ein Auswerfer in Form eines Kurzhubpushers 3 mittels eines als Einstellvorrichtung 13 ausgeführten Halters an dem Gestell 11 angeordnet.

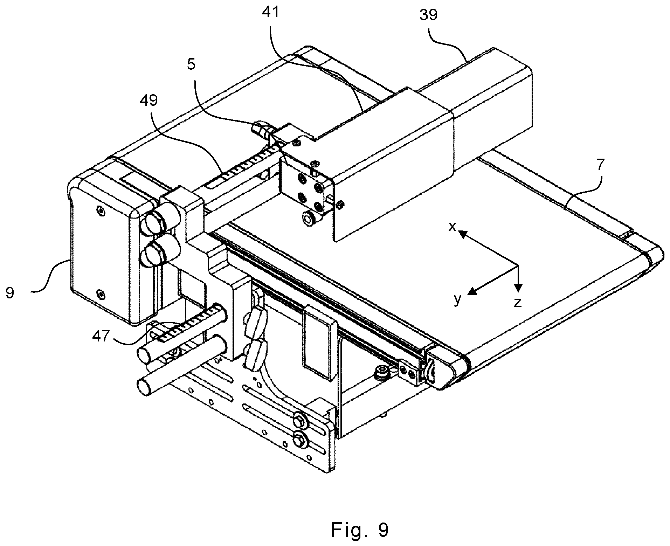

Wie aus Fig. 2, Fig. 4, Fig. 6, Fig. 8 und insbesondere Fig. 9 ersichtlich, besteht die Einstellvorrichtung 13 aus einem ersten und einem zweiten sich in y-Richtung nach hinten (bzw. in Fig. 2, 4, 6, 8 nach links) erstreckenden Führungszylinder 15 und 17, die an dem Gestell 11 ortsfest befestigt, beispielsweise angeschraubt sind.

Die Führungszylinder 15 und 17 erstrecken sich durch entsprechende im unteren Bereich befindliche (Führungs-)Bohrungen eines beispielsweise S-förmigen ersten Einstellelements 19. Quer zu den Führungszylindern 15 und 17 sind in das erste Einstellelement einschraubbare (Flügel-)Schrauben 27 und 29 angeordnet, um das erste Einstellelement 19 an den Führungszylindern 15 und 17 in einer gewünschten Position mit einer Kraft zu beaufschlagen bzw. zu fixieren.

Wie aus Fig. 9 ersichtlich, ist an dem zweiten (oberen) Führungszylinder eine Skala 47 angebracht, auf welcher eine eingestellte Position des Einstellelements 19 abgelesen werden kann.

Im oberen Bereich sind in dem ersten Einstellelement 18 ebenfalls in y-Richtung ein dritter und ein vierter Führungszylinder 23 und 25 ortsfest befestigt, beispielsweise angeschraubt, und erstrecken sich in Richtung zu dem Bandförderer 1.

Die Führungszylinder 23 und 25 erstrecken sich durch entsprechende (Führungs-)Bohrungen des zweiten Einstellelements 21, das fest einem Grundkörper 5 (siehe Fig. 9) des Kurzhubpushers 3 angeordnet ist. Quer zu den Führungszylindern 23 und 25 sind in das zweite Einstellelement 21 einschraubbare (Flügel-)Schrauben 31 und 33 angeordnet, um das zweite Einstellelement 21 und damit den Kurzhubpusher 3 an den Führungszylindern 23 und 25 in einer gewünschten Position mit einer Kraft zu beaufschlagen bzw. zu fixieren.

Wie aus Fig. 1, Fig. 3, Fig. 5, Fig. 7 und Fig. 9 ersichtlich, ist an dem vierten (oberen) Führungszylinder 25 analog zum zweiten Führungszylinder 17 ebenfalls eine Skala 49 angebracht, auf welcher eine eingestellte Position des Einstellelements 21 und damit des Kurzhubpushers 3 abgelesen werden kann.

Da sich der Bandförderer in den Fig. 1 bis Fig. 9 nur in seinen Ansichten und dargestellten Grundpositionen unterscheidet gelten die Bezugszeichen in allen Figuren entsprechend, auch wenn sie aus Übersichtlichkeitsgründen nicht in jeder Figur eingezeichnet sind.

Der Kurzhubpusher besitzt an seiner vorderen (den Produkten zugewandten) Seite einen Endbereich in Form einer Pusherplatte 37, welche mittels einer in der Zeichnung nicht dargestellten Kolbenstange und eines Kolbens aus einem als Zylindergehäuse ausgebildeten Grundkörper 5 heraus in y-Richtung auf das Band 7 (bzw. darauf geförderte Produkte) zu ausgefahren werden kann.

Von der Pusherplatte 37 erstreckt sich in Richtung des Grundkörpers 5 eine erste Schutzabdeckung 39, die über die Länge (in y-Richtung) einen gleichbleibenden Grundriss aufweist, so dass die Schutzabdeckung 39 die Kolbenstange abdeckt und mit der Pusherplatte 37 mitbewegt wird.

Am Kurzhubpusher 3 ist am Grundkörper 5 eine zweite Schutzabdeckung 41 befestigt, welche auch im ausgefahrenen Zustand der Pusherplatte 37 samt erster Schutzabdeckung 39 das Zylindergehäuse nach oben und zu beiden Seiten abdeckt. Auf diese Weise werden entstehende und sich schließende Zwischenräume verdeckt, so dass ein Einklemmen, Quetschen, etc. von Fingern oder Händen des Bedienpersonals verhindert wird.

Da die Schutzabdeckung 39 bei größerem Hub entsprechend länger (in y-Richtung) ausgebildet sein muss, kann durch die erfindungsgemäße kurze Baulänge des Auswerfers vorteilhafterweise auch die Baulänge der Schutzabdeckung 39 verringert werden.

Der Pusher ist vorzugsweise als Kurzhubpusher 3 ausgeführt, der nicht zwingend Produkte zum Aussortieren über die ganze Breite schiebt, sondern alternativ mit einem Impuls am Produkt anschlägt und das Produkt hinausstößt. Durch die Verringerung der Baulänge der Schutzabdeckung 39 verringert sich auch deren mitzubewegende Masse (Massenträgheit), so dass bei einem pneumatischen Pusher auch der aufzuwendende Druck und damit die entstehende Lärmbelästigung vermindert werden kann.

In der in Fig. 1 und Fig. 2 dargestellten ersten Grundposition befindet sich der Grundkörper 5 des Pushers 3 so weit außerhalb des Bandförderers 3, dass die Pusherplatte 37 in nicht betätigtem Zustand, also maximal eingefahrener Position, nur ein geringes Stück innerhalb der Breite B des Bandförderers 1, aber außerhalb der Breite b des Bandes 7 liegt.

Hierbei befinden sich beide Einstellelemente 19 und 21 in ihrer maximal nach hinten (bzw. in Fig. 2 nach links) gefahrenen Endposition.

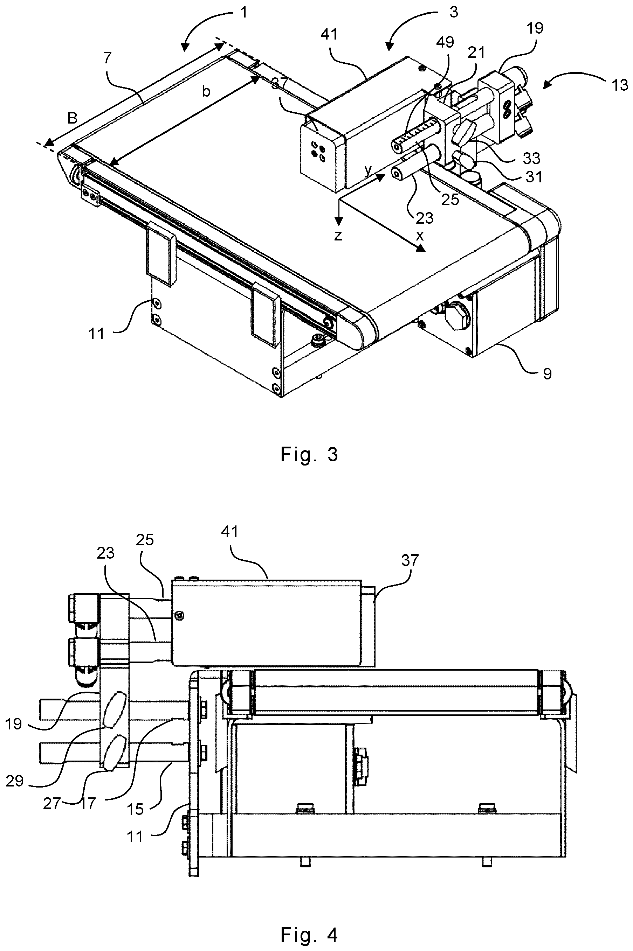

In der in Fig. 3 und Fig. 4 dargestellten zweiten Grundposition befindet sich der Grundkörper des Pushers 3 dagegen so weit innerhalb des Bandförderers 3, dass die Pusherplatte 37 in nicht betätigtem Zustand bereits bis nahe zur Hälfte der Breite B des Bandförderers 3 (und Breite b des Bandes 7) in y-Richtung in diesen hineinragt.

In dieser in Fig. 3 und Fig. 4 dargestellten zweiten Grundposition befinden sich die Einstellelemente 19 und 21 jeweils im mittleren Bereich ihrer Skalen bzw. ihrer Einstellbereiche.

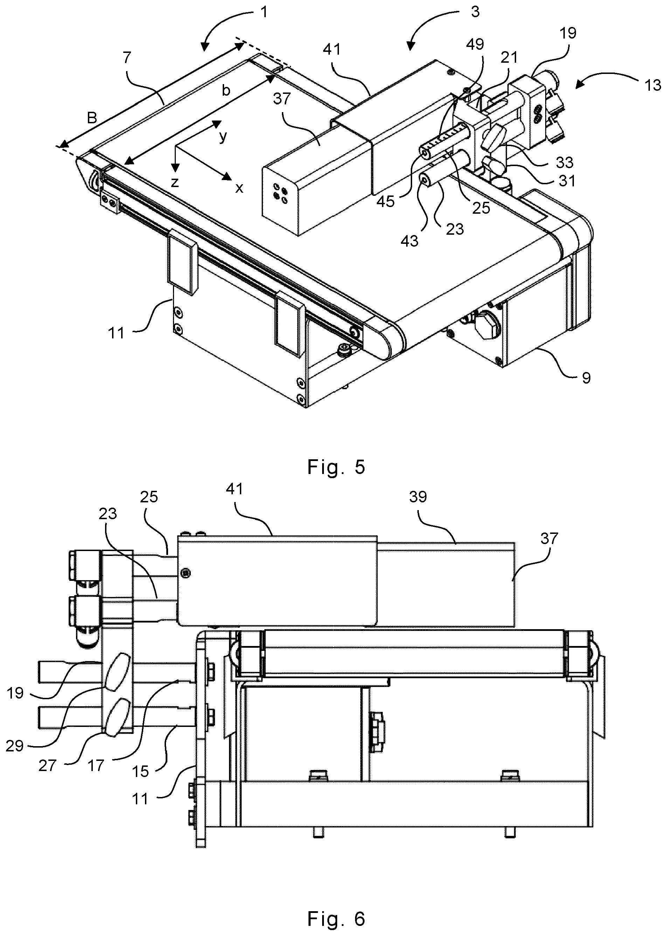

Die Pusherplatte 37 kann in der zweiten Grundposition des Pushers 3 bzw. dessen Grundkörpers 5 in die in Fig. 5 und Fig. 6 dargestellte maximale vorgefahrene Endposition ausgefahren werden, um auf dem Band 7 geförderte Produkte auszusortieren. Infolge des Impulses werden auszusortierende Produkte über den Rand des Bandes 7 und den Rand des Bandförderers 1 gestoßen und beispielsweise in einem Auffangbehälter aufgefangen.

Eine Hubbewegung bis zum Rand des Bandförderers 1 ist infolge des erzeugten Impulses des Kurzhubpushers 3 hierfür nicht erforderlich.

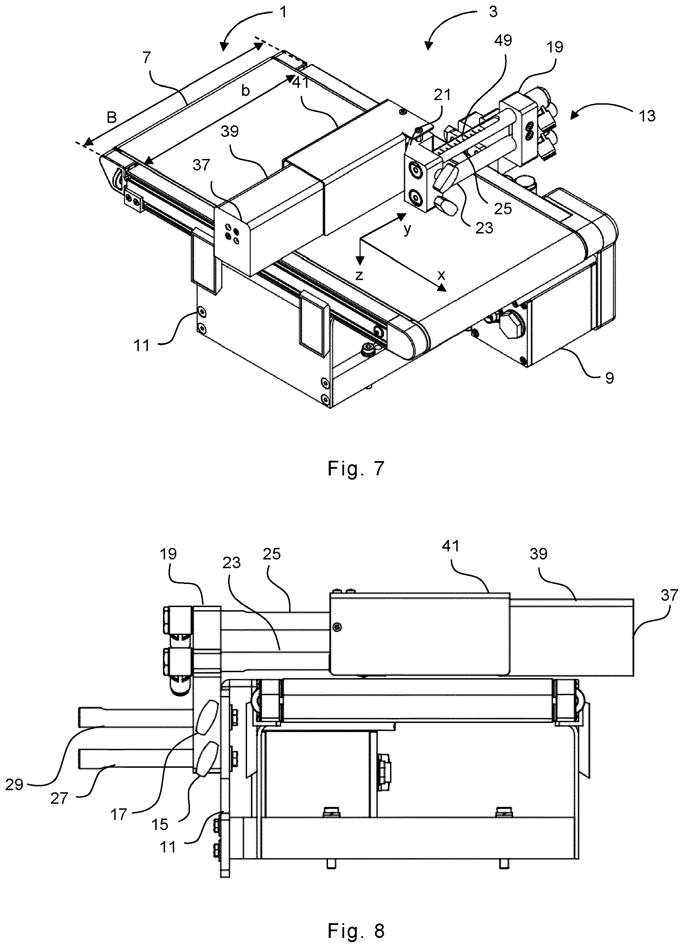

In der in Fig. 7 und Fig. 8 dargestellten dritten Grundposition befindet sich der Pusher 3 dagegen so weit innerhalb des Bandförderers 3, dass die Pusherplatte 37 in nicht betätigtem Zustand (in der Zeichnung nicht dargestellt) bereits bis zu zwei Drittel der Breite B des Bandförderers 3 (und Breite b des Bandes 7) in y-Richtung in diesen hineinragt.

In dieser in Fig. 7 und Fig. 8 dargestellten dritten Grundposition befinden sich die Einstellelemente 19 und 21 jeweils in ihrer maximal nach vorne (bzw. in Fig. 8 nach rechts) gefahrenen Endposition ihrer Skalen bzw. ihrer Einstellbereiche.

Die Pusherplatte 37 reicht in der in Fig. 7 und Fig. 8 dargestellten maximalen vorgefahrenen Endposition über den Rand des Bandförderers 1 hinaus.

Die dargestellten unterschiedlichen Grundpositionen verdeutlichen beispielhaft, wie ein Auswerfer, insbesondere Kurzhubpusher 3, mittels einer vorzugsweise wenigstens zweistufigen Einstellvorrichtung 13 in y-Richtung in das Band hinein verstellt werden kann, um bei einem Produktstrom, der nicht die gesamte Bandbreite b ausfüllt, Produkte effektiver auszusortieren.

Werden in einem (Rand-)Bereich des Bandes 7 keine Produkte gefördert, so kann erfindungsgemäß ein Auswerfer in seiner Position quer zum Band in Richtung der Produkte verstellt werden. In dieser (neuen) Position ragt dann sein nicht betätigter Endbereich bis zu dem tatsächlichen Produktstrom in das Band (über den Bandrand) hinein. Hierdurch wird der Verfahrweg (Hub) eines allgemeinen Sortierers bzw. dessen Endbereichs verkürzt. Entsprechend wird auch der Einsatz eines Kurzhubpushers mit vorteilhafter geringer Baulänge in y-Richtung ermöglicht. In jedem Fall kann erfindungsgemäß die Reaktionszeit (Auswerfvorgang) verkürzt werden, so dass ein höherer Durchsatz ermöglicht wird.

Infolge des kurzen erforderlichen Hubs kann zudem der Druck bei einem pneumatischen Pusher vermindert werden, so dass auch der erzeugte Lärm deutlich verringert wird.

Wie aus Fig. 1, Fig. 3, Fig. 5 und Fig. 7 ersichtlich, sind die Führungszylinder 23 und 25 als Hohlzylinder ausgeführt. Diese Zylinder 23 und 25 können entsprechend einzeln oder beide als Blasdüsen 43 und 45 dienen, um Produkte vom Band 7 bzw. Bandförderer 1 auszublasen. Ein derartiges Bänderräumen ist häufig beim Start einer Maschine bzw. eines Verarbeitungsprozesses erforderlich, um alle noch in einer Produktionsstrecke befindlichen Produkte, vorzugsweise per Dauerluftstrom, zu entfernen.

Da der dritte und vierte Führungszylinder 23, 25 als Blasdüsen ausgebildet sind, können diese mittels des ersten Einstellelements 19 ebenfalls in ihrer Position in y-Richtung in gewünschter Weise eingestellt bzw. positioniert werden.

Das Einstellen der Grundposition des Grundkörpers 5 kann statt manuell, wie im Ausführungsbeispiels dargestellt auch automatisch erfolgen. Statt durch ein manuelles Verschieben und Feststellen mittels Schrauben 27, 29, 31, 33 können die Einstellelemente 19 und 21 auch mittels Aktuatoren, Servomotoren, etc. an den Führungszylindern verstellt werden. Beispielsweise können gewünschte Grundpositionen mittels einer Steuereinrichtung, automatisch eingestellt werden, wobei auch in einem Speicher abgelegte vordefinierte Positionen hierzu abgerufen werden können.

In weiterer Ausgestaltung ist es gar denkbar, dass die tatsächliche (aktuelle) Breite des Produktstroms über eine entsprechende Sensoreinrichtung, beispielsweise Lichtschranke(-n), Näherungssensor oder Kamera, erfasst wird und der Auswerfer, insbesondere Kurzhubpusher 3 bzw. dessen Grundkörper 5 auf eine (mittels einer Auswerteinrichtung ermittelte) Grundposition eingestellt wird. Ein derartiges Einstellen der Grundposition kann für jedes einzelne Produkt oder eine Gruppe bzw. Charge von Produkten erfolgen.

### Bezugszeichenliste:

- 1: Bandförderer
- 3: Kurzhubpusher
- 5: Grundkörper
- 7: Band
- 9: Motor
- 11: Gestell
- 13: Einstellvorrichtung
- 15: erster Führungszylinder
- 17: zweiter Führungszylinder
- 19: erstes Einstellelement
- 21: zweites Einstellelement
- 23: dritter hohler Führungszylinder
- 25: vierter hohler Führungszylinder
- 27: Schraube (Flügelschraube)
- 29: Schraube
- 31: Schraube
- 33: Schraube
- 37: Pusherplatte
- 39: erste Schutzabdeckung
- 41: zweite Schutzabdeckung
- 43: untere Blasdüse
- 45: obere Blasdüse
- 47: erste Skala
- 49: zweite Skala
- B: Breite des Förderbandes
- b: Breite des Bandes 7 (Bandbreite)
- x: Förderrichtung
- y: Querrichtung
- z: Höhenrichtung

## Patentansprüche

1. Bandförderer zur Förderung von Produkten in einer ersten Richtung x (F örderrichtung),
mit einer sich in einer zweiten, zur ersten Richtung orthogonalen Richtung y (Querrichtung) erstreckenden Breite (B), und einer zu den beiden Richtungen x, y orthogonalen Richtung z (Höhenrichtung),
mit einem ortsfest zum Bandförderer (1) angeordneten und in y-Richtung (Querrichtung) wirkenden Auswerfer (3) zum Aussortieren/Ausschleusen von Produkten,
wobei der Auswerfer (3) einen Endbereich (37) aufweist, welcher dem auszusortierenden Produkt zugewandt ist,
wobei der Auswerfer (3) einen Grundkörper (5) aufweist, welcher mittels eines Halters in einer Grundposition am Bandförderer (1) angeordnet ist,
**dadurch gekennzeichnet, dass**
a) die Grundposition des Grundkörpers (5) mittels einer Einstellvorrichtung (13) des Halters in y-Richtung innerhalb eines Einstellweges eingestellt werden kann,
b) so dass der Endbereich (37) des nicht betätigten Auswerfers (3) in y-Richtung um wenigstens bis zur halben Breite (B), bevorzugt zwei Drittel der Breite (B) bzw. höchst bevorzugt um die gesamte Breite (B) des Bandförderers (1) in das Band (7) hineinragen kann,
c) wobei die Baulänge des Auswerfer-Grundkörpers (5) in y-Richtung wesentlich kleiner als die Breite (B) des Bandförderers (1) ist.

2. Bandförderer nach Anspruch 1, **dadurch gekennzeichnet, dass** die Einstellvorrichtung (13) des Halters wenigstens zweistufig ausgebildet ist.

3. Bandförderer nach Anspruch 1 oder 2, **dadurch gekennzeichnet, dass** die Einstellvorrichtung (13) des Halters aus wenigstens zwei separaten Verstellvorrichtungen (19, 21) zusammengesetzt ist, deren Einstellwege parallel zueinander verlaufen und in Summe den Gesamteinstellweg bilden.

4. Bandförderer nach einem der vorhergehenden Ansprüche, **dadurch gekennzeichnet, dass** der Auswerfer (3) als Pusher, Hubsortierer oder Blasvorrichtung ausgeführt ist.

5. Bandförderer nach einem der vorhergehenden Ansprüche, **dadurch gekennzeichnet, dass** der Auswerfer (3) als Kurzhubpusher ausgeführt ist.

6. Bandförderer nach Anspruch 5, **dadurch gekennzeichnet, dass** der Kurzhupusher einen bauartbedingten Hub aufweist, der maximal drei Viertel, vorzugsweise die Hälfte, der Bandbreite (b) nicht übersteigt.

7. Bandförderer nach einem der vorhergehenden Ansprüche, **dadurch gekennzeichnet, dass** die Einstellvorrichtung (13) in y-Richtung mindestens einen hohlen Führungszylinder (23, 25) aufweist, der als Luftleitelement, vorzugsweise mit einer austauschbaren Düse, ausgestaltet ist, um ein Ausblasen von Produkten zu ermöglichen.

8. Bandförderer nach einem der vorhergehenden Ansprüche, **dadurch gekennzeichnet, dass** die Einstellvorrichtung (13) eine Positionseinrichtung (47, 49) aufweist, mittels welcher die aktuelle Grundposition erfasst oder eingestellt werden kann.

9. Bandförderer nach Anspruch 8, **dadurch gekennzeichnet, dass** die Positionseinrichtung (47, 49) derart ausgebildet ist, dass die Grundpositionen automatisch eingestellt und/oder überprüft und/oder ermittelt und/oder angezeigt werden können.

10. Verwendung eines Bandförderers nach einem der vorhergehenden Ansprüche, so dass bei einem Produktwechsel automatisch eine neue vordefinierte oder berechnete Grundposition eingenommen wird.

11. Verwendung nach Anspruch 10, **dadurch gekennzeichnet, dass** die Grundposition in Abhängigkeit einer mittels einer Sensoreinrichtung detektierten Produktposition in y-Richtung automatisch angepasst wird.

12. Auswerfer mit einer Einstellvorrichtung für einen Bandförderer nach einem der vorhergehenden Ansprüche.

13. Verfahren zum Aussortieren/Ausschleusen von Produkten für einen Bandförderer, der nach einem der Ansprüche 1 bis 9 ausgebildet ist, mit einem Auswerfer nach Anspruch 12,
**dadurch gekennzeichnet, dass**
a) eine Grundposition eines Grundkörpers (5) des Auswerfers (3), in welcher der Grundkörper (5) mittels eines Halters in der Grundposition am Bandförderer (1) angeordnet ist, mittels einer Einstellvorrichtung (13) des Halters in y-Richtung (Querrichtung zum Band) innerhalb eines Einstellweges eingestellt wird,
b) so dass ein dem auszusortierenden Produkt zugewandter Endbereich (37) des nicht betätigten Auswerfers (3) in y-Richtung um wenigstens bis zu einer halben Breite (B), bevorzugt zwei Drittel der Breite (B) bzw. höchst bevorzugt um die gesamte Breite (B) des Bandförderers (1) in das Band (7) hineinragt.
